# EUROPEAN PATENT APPLICATION

(11) **EP 2 980 985 A1**
(43) Date of publication of application: **03.02.2016**
(21) Application number: 14178770.5
(22) Date of filing: 28.07.2014
(51) Int. Cl.: H02P 25/22, H02K 3/28, H02M 7/10, H02M 7/17, H02M 7/49

(54) **Method of connecting a power converter to an electrical machine and a power system comprising a power converter and an electrical machine**

(71) Applicant: ABB Technology Ltd, 8050 Zürich (CH)
(72) Inventor: BOSGA, Sjoerd, 723 53 Västerås (SE); TOADER, Stefan, 72339 Västerås (SE)
(74) Representative: Savela, Reino Aleksi

(57) **Abstract**

The present disclosure relates to method of connecting a power converter to an electrical machine, which power converter comprises series-connected converter cells (C₁-C₉), and which electrical machine comprises a plurality of coil groups (W₁-W₉), wherein the number of the coil groups (W₁-w₉) is equal to the number of the converter cells (C₁-C₉). The method comprises connecting a first coil group (W₁-W₉) to a first converter cell (C₁; C₉) at one extreme end of the series-connected converter cells (C₁-C₉), connecting an adjacent coil group (W₁-W₉) in one, first direction away from the first coil group to a second converter cell (C₂; C8) adjacent to the first converter cell, and connecting further adjacent coil groups (W₁-W₉) in the first direction to subsequent even-numbered converter cells until all even-numbered converter cells (C_{2,} C₄, C6, C8) have been connected, and connecting an adjacent coil group (W₁-W₉) in the other, second direction away from the first coil group (W₁-W₉) to a third converter cell (C₃; C₇) adjacent to the second converter cell (C₂; C8), and connecting further adjacent coil groups (W₁-W₉) in the second direction to further subsequent odd-numbered converter cells until all odd-numbered converter cells have been connected. A power system comprising an electrical machine and a power converter connected in the manner described above is also provided.

## Description

### TECHNICAL FIELD

The present disclosure generally relates to electrical machines. In particular it relates to a method of connecting a power converter to an electrical machine, and to a power system comprising a power converter and an electrical machine connected by means of the method.

### BACKGROUND

Electrical machines may comprise a stator and a rotor which is able to rotate relative to the stator. The stator may comprise a plurality of slots which for example may be arranged along the inner circumference of the stator. Coils may be arranged in the machine slots. The coils may be connected to series-connected converter cells of a power converter. For example, each electrical-machine coil may be connected to an individual converter cell. A large voltage is applied across these series-connected cells. Typically, a first machine coil would be connected to a first cell, a second adjacent coil to a second cell and so forth. Thus, adjacent coils are connected to adjacent converter cells.

The electrical insulation required between an electrical-machine coil and the machine iron, i.e. ground, is equal to the highest potential in the system, which, disregarding transients, is equal to half the DC supply voltage. The electrical insulation between two adjacent coils is determined by the potential difference between a point in one coil and a point in the other coil. Since adjacent coils are connected to adjacent converter cells, it could be supposed that this level equals twice the converter cell voltage level. For example for a 9-converter-cell topology, this would be 2/9^{th} of the DC voltage. However, in the electrical machine, the coil connected to the first converter cell and the coil connected to the last converter cell are also adjacent. This means that these coils must be constructed to withstand the full DC voltage between them. Not only is this twice as much as the electrical insulation to ground, it is also not equally required for all coils.

### SUMMARY

In view of the above, an object of the present disclosure is to provide a method of connecting series-connected converter cells to the coils of an electrical machine in a manner which reduces the overall requirements of the electrical insulation.

Another object is to provide a power system which comprises a power converter and an electrical machine that are connected by means of this method.

Hence, according to a first aspect of the present disclosure there is provided a method of connecting a power converter to an electrical machine, which power converter comprises series-connected converter cells, and which electrical machine comprises a plurality of coil groups, wherein the number of the coil groups is equal to the number of the converter cells, wherein the method comprises: connecting a first coil group to a first converter cell at one extreme end of the series-connected converter cells, connecting an adjacent coil group in one, first direction away from the first coil group to a second converter cell adjacent to the first converter cell, and connecting further adjacent coil groups in the first direction to subsequent even-numbered converter cells until all even-numbered converter cells have been connected, and connecting an adjacent coil group in the other, second direction away from the first coil group to a third converter cell adjacent to the second converter cell, and connecting further adjacent coil groups in the second direction to further subsequent odd-numbered converter cells until all odd-numbered converter cells have been connected.

By connecting coil groups that are adjacent in the electrical machine either to adjacent converter cells or to converter cells that are separated by a single converter cell the high level of required inter-coil or inter-winding insulation and the asymmetry in previous designs may be reduced. The method is suitable for both even- and odd-cell-number topologies.

Whereas the coil to ground voltage is not affected, remaining at half the DC voltage, the inter-coil insulation level is limited to 3/N, wherein N is the number of phases, times the DC voltage. This reduces the cost of winding insulation and the physical dimension of the coils, i.e. the end-windings. Reducing coil or end-winding dimensions furthermore improves system cost by reducing winding inductance. The proposed connection method results in the most similar requirements for all inter-coil insulation, and has the lowest required insulation level of all possible schemes.

According to one embodiment each coil group comprises only one coil.

According to one embodiment each coil group comprises a plurality of adjacently arranged coils.

According to one embodiment the number of adjacently arranged coils in a coil group is the same for all coil groups.

According to one embodiment the power converter is an inverter or a rectifier.

According to a second aspect of the present disclosure there is provided a power system comprising an electrical machine comprising a plurality of coil groups, and a power converter comprising series-connected converter cells, wherein the number of the coil groups is equal to the number of the converter cells, wherein a first coil group is connected to a first converter cell at one extreme end of the series-connected converter cells, wherein an adjacent coil group in one, first direction away from the first coil group is connected to a second converter cell adjacent to the first converter cell, and further adjacent coil groups in the first direction are connected to subsequent even-numbered converter cells such that all even-numbered converter cells are connected, and wherein an adjacent coil group in the other, second direction away from the first coil group is connected to a third converter cell adjacent to the second converter cell, and further adjacent coil groups in the second direction are connected to further subsequent odd-numbered converter cells such that all odd-numbered converter cells are connected.

According to one embodiment each coil group comprises only one coil.

According to one embodiment each coil group comprises a plurality of adjacently arranged coils.

According to one embodiment the number of adjacently arranged coils in a coil group is the same for all coil groups.

According to one embodiment the electrical machine comprises machine slots in which the coil groups are arranged.

According to one embodiment the power converter is an inverter or a rectifier.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a power system comprising a power converter and an electrical machine;
Fig. 2 schematically shows a portion of a cross section of an electrical machine,
Fig. 3 depicts a circular diagram of coil-converter cell connections according to the prior art;
Figs 4a-b show examples of circular diagrams of coil-converter cell connections according to the present disclosure;
Fig. 5 depicts an example of a power converter;
Figs 6a-b shows connection schemes for the power converter in Fig. 5;
Figs 7a-7b show examples of examples of coil configurations in machine slots, and
Fig. 8 shows a flowchart of a method of connecting a power converter having converter cells to an electrical machine.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

In the following, various examples of how cascade-connected converter cells may be connected to coil groups of an electrical machine in an optimal manner concerning insulation requirements will be described. In particular, methods will be shown where each converter cell is connected to a respective coil group.

With a coil group is meant one or more coils or coil halves arranged adjacent to each other in the electrical machine. With a coil is meant a wire which has a first end and a second end, wherein the first end forms part of one coil half and the second end forms part of the other coil half of that coil. Typically, both the first end and the second end of a coil are connected to the same converter cell to form a closed circuit.

The method may be applied to any type of electrical machine, e.g. a rotating electrical machine or a linear electrical machine, electrical machines which do not comprise slots for the coils, and machines which comprise slots arranged to receive a coil or a coil half.

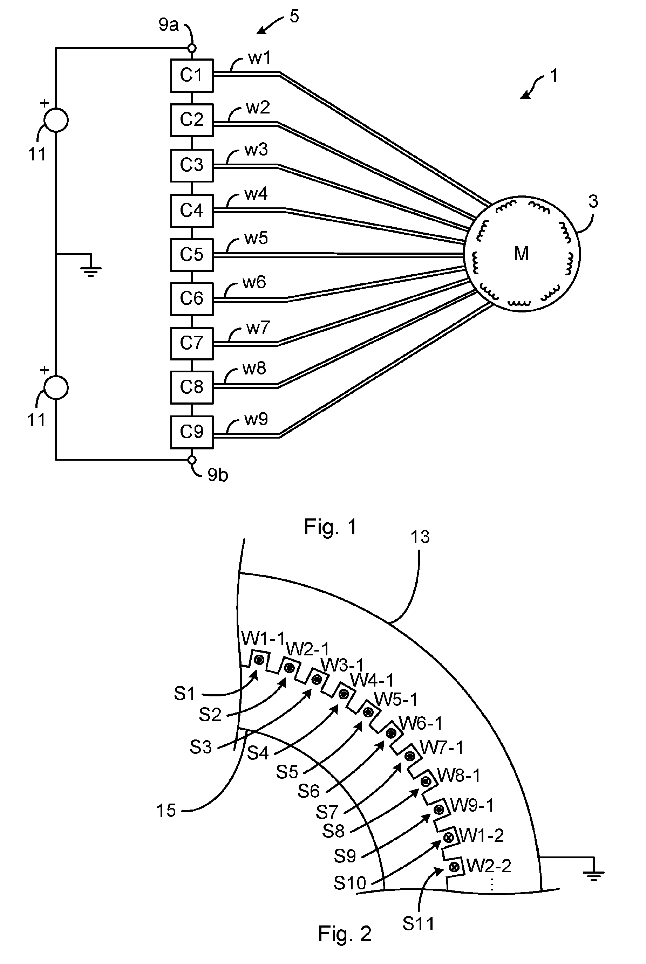

Fig. 1 shows an example of a power system 1 comprising an electrical machine 3 and a plurality of coil groups W1 to W9, and a power converter 5 connectable to the electrical machine 3. The electrical machine comprises a static part, a stator in the event of a rotating machine, and a movable part, a rotor in the event of a rotating machine. The electrical machine 3 may thus be a rotating machine or a linear machine. The electrical machine 3 further comprises an electrical insulation system arranged to electrically insulate the coils from the static part, which typically is grounded.

The electrical machine 3 may according to one variation comprise a plurality of machine slots. The coil groups W1 to W9 may be arranged in the machine slots. According to this variation the static part or stator comprises the machine slots, however the machine slots could be alternatively be provided on the rotor.

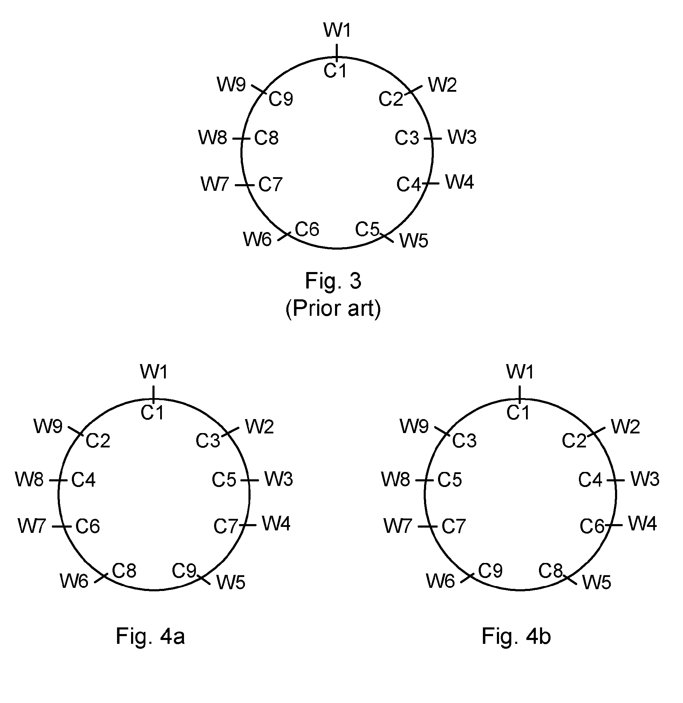

The power converter 5 comprises a plurality of converter cells C1 to C9 cascade connected in series. The series-connected converter cells C1 to C9 form a branch and define a current path. Each converter cell C1 to C9 is connected to a coil group, which comprises at least one coil, of the electrical machine 3. The specific manners in which the coil groups W1 to W9 may be connected to the converter cells C1 to C9, for any number of converter cells, odd or even, will be described with reference to Figs 4a-6.

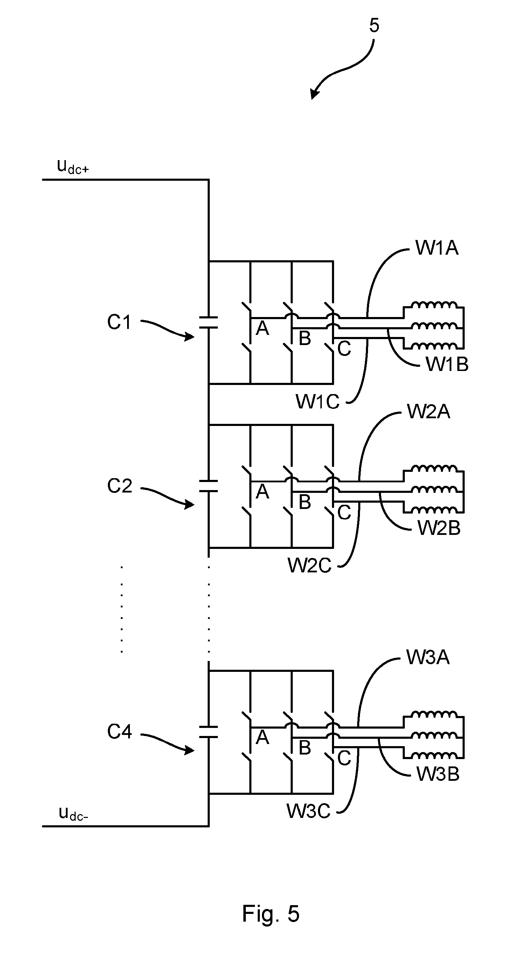

The converter cells C1 to C9 may comprise switches which are able to assume a conducting and a non-conducting state, for example by means of suitably controlling the switches. The switches may for example be IGBTs, thyristors or any other switchable semiconductor. The power converter 5 may further comprise a control system which is arranged to control switching of the switches of the converter cells C1 to C9. According to one variation some converter cells may comprise diodes as switches. The converter cells C1 to C9 may for example have an H-bridge topology, or the topology shown in Fig. 5.

Although the exemplified power converter 5 comprises nine converter cell C1 to C9 it should be noted that the power converter may comprise any number of converter cells. The power converter 5 may be an inverter, in which case the electrical machine can be used as a motor, or a rectifier in which case the electrical machine can be used as a generator.

The power converter 5 has two terminals 9a and 9b. In case the power converter 5 is an inverter, the two terminals 9a and 9b are connectable to one or more DC supplies 11, and across which a DC voltage is provided when the power converter 5 is in operation. The midpoint of the DC voltage may be grounded physically, as shown in the example. However, the considerations described herein are valid even if no physical midpoint exists.

The power converter may furthermore in some variations comprise parallel branches of cascade connected converter cells, which may be necessary for very high power applications.

Fig. 2 schematically shows a cross section of an example of a portion of stator 13 and a rotor 15 of an electrical machine. The stator 13 comprises a plurality of machine slots, of which machine slots S1-S11 are shown. A respective coil half W1-1 to W9-1 is arranged in each machine slot S1-S9, continuing with coil half W1-2 in machine slot S10.

According to the example in Fig. 2, there are nine electrical phases and thus nine coils, each having two coil halves, and nine converter cells C1 to C9 to which the coils are connected. The coil halves W1-1 to W2-2 are arranged subsequently in the machine slots S1-S11 with the first coil W1 being connected to the first converter cell C1 in the branch of series-connected converter cells. The first coil half W1-1 is arranged in the first machine slot S1. The second coil half W2-1 is connected to the second converter cell C2 and arranged in the second machine slot S2 and so on until the ninth converter cell C9 which is connected to coil half W9-1 arranged in machine slot S9. All coil halves W2-1 to W8-1 are connected to adjacent converter cells, i.e. converter cells which have terminals connected between each other. For these coils, the voltage difference between any point in a coil and any point in an adjacent coil is never higher than the sum of the absolute value of the voltages across these two coils. However, a problem arises in the coil halves in machine slots S10 and S9. Since these coils are connected to converter cells at the opposite end of the converter cell branch, the voltage between a point in one coil half and a point in the adjacent coil half, e.g. coil half W9-1 in machine slot 9 and coil W1-2 in machine slot S10, can here be as large as the full DC voltage.

The manner in which the coils W1-W9 are connected to the converter cells C1 to C9 in Fig. 1 may be illustrated in a circular diagram, as shown in Fig. 3. It can here be seen that although coils W2-W8 are adjacent to each other in a subsequently increasing order, coil W1 is adjacent also to coil W9. This would be the case of the coil to converter cell connection configuration described with reference to Fig. 2.

Turning to Figs 4a and 4b a connection of the converter cells C1-C9 in Fig. 1 with the coils W1-W9 has been made in accordance with the present invention. The connection scheme for these examples provides a voltage between points in adjacent coils not higher than three times the peak voltage in a single coil. Adjacent coils are either connected to adjacent converter cells or to converter cells with no more than one converter cell between them.

A simple way of describing a general method for connecting coil groups e.g. coils W1 to W9, or any number of coils, with reference to a circular diagram such as the ones shown in Figs 4a and 4b is to connect the first coil or coil group to the first converter cell of the branch, and continue to connect all odd-numbered converter cells to adjacent coils or coil groups, in either clockwise or counter-clockwise direction. Then the second converter cell of the converter cells of the branch is connected to the still not-connected coil or coil group adjacent to the first coil or coil group, and continue to connect all even numbered converter cells to adjacent coils or coil groups continuing in this direction, which is the opposite direction compared to the direction chosen for connecting the odd-numbered cells.

A more formal way of describing the connection schemes would be to describe the scheme in Fig. 4a as follows. This description is valid for any number N of converter cells, where N can be either odd or even.
- Connect coil or coil group n, where n <= (N+1)/2, to converter cell number 2n-1 with respect to the first of a branch of converter cells.
- Connect coil or coil group n, where n > (N+1)/2, to converter cell number 2*(N - n + 1) with respect to the first converter cell.

Similarly, the scheme in Fig. 4b can be described as:
- Connect a first coil or coil group to the first converter cell in a branch of converter cells.
- Connect coil or coil group n, where 1 < n <= (N+2)/2 to converter cell number 2n-2 with respect to the first converter cell.
- Connect coil or coil group n, where n > (N+2)/2 to converter cell number 2*(N - n) + 3 with respect to the first converter cell.

The numbering may of course start from either end of the branch of converter cells.

A third way to describe these schemes is:
- Connect a first coil or coil group to the first converter cell.
- Connect the coil or coil group, that is "furthest away" to converter cell N, as seen in the circular diagram.

For the case where the converter has an even number of converter cells, there is only one coil or coil group that is "furthest away", it has number 1+N/2. Now there are two options:
1. Connect all odd numbered converter cells, the numbers being counted in a successively increasing order from the first converter cell, to coils or coil groups, on the right of the circle, i.e. to coils or coil groups with numbers smaller than 1+N/2. Connect all even numbered converter cells to coils or coil groups on the left of the circle, i.e. to coils or coil groups with numbers higher than or equal to 1+N/2.
2. Connect all odd numbered converter cells to coils or coil groups on the left of the circle, i.e. to coils or coil groups with numbers higher than 1+N/2. Connect all even numbered converter cells to coils or coil groups on the right of the circle, i.e. to coils or coil groups with numbers smaller than or equal to 1+N/2.

For the case where the converter has an odd number of converter cells, there are two phases that are "furthest away". They have numbers (N+1)/2 and (N+3)/2. Also here the two options consist in whether even-numbered converter cells are connected to coils or coil groups on the right, as shown in Fig. 4b, or on the left as shown in Fig. 4a.

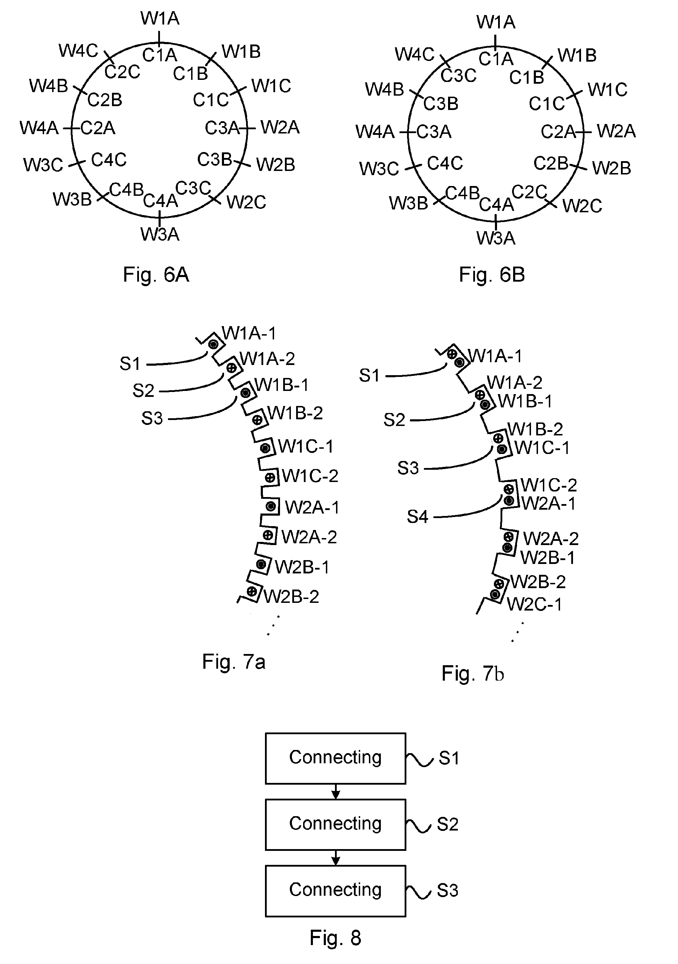

The methods described herein may, as previously mentioned, also be applied when a coil group comprising more than one adjacent coil or coil half is connected to converter cells. Fig. 5 depicts an example of a power converter 5 which has cascade-connected converter cells C1-C4, which converter cells C1-C4 are 3-phase converter cells connectable to an electric machine, e.g. a motor. Each converter cell C1-C4 is connectable to a respective one of coils W1A-W4A, W1B-W4B, and W1C-W4C. In this case, each set of coils WXA-WXC, where X is an integer between 1 and 4, define a coil group. Figures 6a and 6b show the two variations of the method presented herein applied to the power converter 5 shown in Fig. 5.

Figs 7a and 7b show examples of "concentrated windings" configurations for coils of a power converter having 3-phase converter cells as shown in Fig. 5 utilising the connection schemes presented herein. As shown in Fig. 7a, each coil half W1A-1 and W1A-2 connected to a 3-phase converter cell may be arranged in adjacent machine slots S1 and S2, continuing in this manner for all coil halves W1B-1, W1B-2, W1C-1, W1C-2, W2A-1, W2A-2, W2B-1, W2B-2 and so on. According to another example, as shown in Fig. 7b, several coil halves, for example two coil halves, may be arranged in the same machine slot S1, S2, S3, S4.

Corresponding configurations may also be utilised for an H-bridge converter cell topology.

A fourth manner to describe the connection method, which does not depend on the circular diagram representation, will now be described in more detail with reference to the flowchart in Fig. 8. It should be noted that the steps need not to be carried out in the specific order described below one the first coil group has been connected to a converter cell; step S2 may hence be performed prior to step S3 or step S3 may be performed prior to step S2.

In a step S1 a first coil group is connected to a first converter cell at one extreme end of the series-connected converter cells. In the exemplified power system 1, this would mean converter cell C1 or converter cell C9.

In a step S2 an adjacent coil group in one, first direction away from the first coil group is connected to a second converter cell adjacent to the first converter cell, which is converter cell C2 or C8 in the example in Fig. 1. Further adjacent coil groups in the first direction are connected to subsequent even-numbered converter cells until all even-numbered converter cells C2, C4, C6, C8 have been connected.

In a step S3 an adjacent coil group in the other, second direction away from the first coil group is connected to a third converter cell, which is adjacent to the second converter cell C2, C8. According to the example in Fig. 1, the third converter cell may be converter cell C3 or C7. Further adjacent coil groups in the second direction are connected to further subsequent odd-numbered converter cells until all odd-numbered converter cells C1, C3, C5, C7, C9 have been connected.

It should be mentioned that the connection scheme could be repeated during a connection procedure. For example, the machine shown in Fig. 2 could have the first 18 slots containing nine coils. Then, it could have another 18 slots, containing again coils the same nine coils, where this second set of coils with the same name are connected either in series or in parallel with the first set of coils. This is a very common way in machine design; to create a multi-pole machine, a certain coil configuration is repeated, once for every pole pair.

The invention applies to multi-pole machines in the same way as to two-pole machines.

Thus, according to one embodiment each coil group comprises a plurality of, series and/or parallel connected, sub-groups, which sub-groups are separated from each other by all other sub-groups. Each sub-group comprises only one coil or each sub-group comprises a plurality of adjacently arranged coils.

In the manner described above the power converter 5, or any variation thereof in terms of number of series-connected converter cells, and the electrical machine 3 may be connected. This connection method provides optimal connection of the converter cells to the electrical phases represented by the coils arranged in the machine slots of the electrical machine in the sense that the largest voltage between points in adjacent coils is not higher than three times the peak voltage in a single coil.

The power system presented herein may beneficially be utilised in low voltage applications, medium voltage applications or high voltage applications.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of connecting a power converter (5) to an electrical machine (3), which power converter (5) comprises series-connected converter cells (C1-C9), and which electrical machine (3) comprises a plurality of coil groups (W1-W9), wherein the number of the coil groups (W1-W9) is equal to the number of the converter cells (C1-C9), wherein the method comprises:
connecting (S1) a first coil group (W1-W9) to a first converter cell (C1; C9) at one extreme end of the series-connected converter cells (C1-C9),
connecting (S2) an adjacent coil group (W1-W9) in one, first direction away from the first coil group to a second converter cell (C2; C8) adjacent to the first converter cell, and connecting further adjacent coil groups (W1-W9) in the first direction to subsequent even-numbered converter cells until all even-numbered converter cells (C2, C4, C6, C8) have been connected, and
connecting (S3) an adjacent coil group (W1-W9) in the other, second direction away from the first coil group (W1-W9) to a third converter cell (C3; C7) adjacent to the second converter cell (C2; C8), and connecting further adjacent coil groups (W1-W9) in the second direction to further subsequent odd-numbered converter cells until all odd-numbered converter cells have been connected.

2. The method as claimed in claim 1, wherein each coil group (W1-W9) comprises only one coil.

3. The method as claimed in claim 1, wherein each coil group (W1-W9) comprises a plurality of adjacently arranged coils.

4. The method as claimed in claim 3, wherein the number of adjacently arranged coils in a coil group (W1-W9) is the same for all coil groups (W1-W9).

5. The method as claimed in any of the preceding claims, wherein the power converter (5) is an inverter or a rectifier.

6. A power system (1) comprising:
an electrical machine (3) comprising a plurality of coil groups (W1-W9), and
a power converter (5) comprising series-connected converter cells (C1-C9),
wherein the number of the coil groups (W1-W9) is equal to the number of the converter cells (C1-C9),
wherein a first coil group (W1-W9) is connected to a first converter cell (C1; C9) at one extreme end of the series-connected converter cells,
wherein an adjacent coil group (W1-W9) in one, first direction away from the first coil group is connected to a second converter cell (C2; C8) adjacent to the first converter cell (C1; C9), and further adjacent coil groups (W1-W9) in the first direction are connected to subsequent even-numbered converter cells such that all even-numbered converter cells are connected, and
wherein an adjacent coil group (W1-W9) in the other, second direction away from the first coil group is connected to a third converter cell (C3; C7) adjacent to the second converter cell (C2; C8), and further adjacent coil groups in the second direction are connected to further subsequent odd-numbered converter cells such that all odd-numbered converter cells are connected.

7. The power system (1) as claimed in claim 6, wherein each coil (W1-W9) group comprises only one coil.

8. The power system (1) as claimed in claim 6, wherein each coil group (W1-W9) comprises a plurality of adjacently arranged coils.

9. The power system (1) as claimed in claim 8, wherein the number of adjacently arranged coils in a coil group (W1-W9) is the same for all coil groups (W1-W9).

10. The power system (1) as claimed in any of claims 6-9, wherein the electrical machine (3) comprises machine slots in which the coil groups (W1-W9) are arranged.

11. The power system (1) as claimed in any of claims 6-10, wherein the power converter (5) is an inverter or a rectifier.
